# EUROPÄISCHE PATENTSCHRIFT

(11) **EP 0 251 252 B1**
(45) Veröffentlichungstag und Bekanntmachung des Hinweises auf die Patenterteilung: **17.03.1993**
(21) Anmeldenummer: 87109245.8
(22) Anmeldetag: 26.06.1987
(51) Int. Cl.: H02G 9/02, H02G 1/10

(54) **Zusatzbewehrung für Kabel**
Supplementary armour for cables
Armature supplémentaire pour câble

(30) Priorität: 01.07.1986 DE 3622065
(43) Veröffentlichungstag der Anmeldung: 07.01.1988
(73) Patentinhaber: SIEMENS AKTIENGESELLSCHAFT, 80333 München (DE)
(72) Erfinder: Giebel, Wolfgang, Dipl.-Ing., D-8035 Gauting (DE); Kunze, Dieter, Dipl.-Ing., D-8027 Neuried (DE)

(56) Entgegenhaltungen:
- EP-A- 0 001 541
- DE-B- 1 204 731
- FR-A- 1 568 848
- FR-A- 2 343 347
- GB-A- 2 027 553
- GB-A- 2 089 140
- GB-A- 2 115 600
- US-A- 3 175 282

## Beschreibung

Die Erfindung betrifft eine Zusatzbewehrung für Kabel, insbesondere für Seekabel, wobei das zu bewehrende Kabel in Aufnahmen dieser längsverlaufenden Zusatzbewehrung eingebracht ist.

Es ist bekannt, Kabel für besondere Einsatzfälle, zum Beispiel beim Verlegen auf dem Meeresgrunde, mit zusätzlichen Bewehrungen bzw. Schutzmitteln zu versehen, durch die dann das zunächst hierfür nicht geeignete Kabel trotzdem zum Einsatz kommen kann. Eine solche zusätzliche Schutzmaßnahme für ein Kabel wird in der DE-OS 31 45 022 beschrieben. Dort wird eine rohrförmige Versteifungsvorrichtung rund um das Kabel in den Zonen des Kabels angeordnet, die den unebenen Bereichen des Wassergrundes entsprechen. Diese verwendeten Rohre besitzen eine Starrheit, die größer als die Starrheit des Kabels ist. Diese Versteifungsvorrichtungen werfen jedoch bei der Montage der Rohreinrichtung selbst wie auch bei der Einbringung des Kabels in diese Rohreinrichtung gewisse Probleme auf, die entsprechenden Aufwand erfordern.

Nun ist weiterhin bekannt, daß man leichte Kabel zum Versenken in Gewässern mit Sinkgewichten versieht, die ebenfalls nachträglich und zwar nur bei Bedarf am Kabel befestigt werden. Solche Sinkgewichte werden in der EP 0 001 541 näher beschrieben. Man verwendet dort einen langgestreckten, zylindrischen und gewichtigen Körper, der eine längsverlaufende Aufnahme aufweist, in welche das Kabel eingebracht wird. Diese Ausführungsform ist relativ starr, seiner Aufgabe entsprechend sehr schwer und nur jeweils für ein bestimmtes Kabel verwendbar, so daß mehrere Typen bereitzustellen sind.

Aufgabe vorliegender Erfindung ist nun, eine Zusatzbewehrung für Kabel, insbesondere Seekabel zu schaffen, die in weiten Bereichen für beliebige Kabelausführungsformen verwendbar ist, wobei dem Kabel durch diese Zusatzbewehrung in der gesamten Kombination neben dem erhöhten mechanischen Schutz eine erhöhte Zugfestigkeit bei guter Flexibilität zu verleihen ist. Die gestellte Aufgabe wird nun mit Hilfe einer Zusatzbewehrung der eingangs geschilderten Art dadurch gelöst, daß die Zusatzbewehrung längsgerichtete zugfeste Elemente aufweist und daß die Aufnahmen in der Hauptrichtung kontinuierlich fortlaufend angeordnet sind.

Die Übertragung von Nachrichten unter Wasser, zum Beispiel von Insel zu Insel oder vom Festland zu einer Insel, erfolgt zum Beispiel mit Hilfe von unbewehrten Tiefseekabeln und mit mittelstark bis stark bewehrten Küstenkabeln. Gründe für die Bewehrung liegen unter anderem darin, daß die Kabel vor Beschädigungen durch Anker, Staken, Schleppnetzen etc. geschützt werden müssen. Diese Bewehrungen haben jedoch auch Nachteile, da sie fest mit dem jeweiligen Kabel verbunden sind und dementsprechend nicht an beliebiger Stelle weggelassen werden können. Daraus folgt zum Beispiel, daß gegebenenfalls unterschiedliche Kabeltypen gelagert werden müssen, die dann beim Verlegen vom Schiff aus dort geschnitten und gespleißt werden müssen. Daraus ergibt sich unter Umständen auch, daß hochwertige Kabel dort eingesetzt werden, wo die Funktion auch von niederwertigeren Kabeln erfüllt werden könnte. Bei sehr kleinen Kabeln ist jedoch das nachträgliche Aufbringen von Bewehrungen mit hoher Zugfestigkeit besonders problematisch. Gemäß der Erfindung soll nun auf dem Verlegegerät, zum Beispiel dem Schiff, je nach Anwendungsfall eine leichte oder schwere Bewehrung aufgebracht werden, wobei keine aufwendigen Maschinen, wie zum Beispiel Verseilvorrichtungen oder ähnliche, verwendet werden sollen. Dieses Konzept läßt sich bei allen Kabeln anwenden; besonders vorteilhaft ist es jedoch zum Beispiel bei der Verwendung von Lichtwellenleiterkabeln, da die Übertragung vieler Signale über große Entfernungen ohne Zwischenverstärker erfolgen kann, wobei das Kabel selbst sehr geringe Dimensionen aufweist. Bereits vorhandene Bewehrungen im Kabel selbst sind dabei nicht störend; da diese sich zur Wirkung der Zusatzbewehrung gemäß der Erfindung addiert. So ist es also möglich, ein Kabel je nach seinem Einsatzbereich entsprechend nachträglich ohne großen Aufwand bezüglich seiner Bewehrung und damit seiner mechanischen Eigenschaften den gerade erforderlichen Gegebenheiten anzupassen. So werden diese gemäß der Erfindung bereits durch ein einfaches Flachprofil erfüllt, an welches das Kabel angebracht wird, doch empfiehlt es sich die im nachfolgenden näher beschriebenen Ausführungsformen zu verwenden, da sie alle Erfordernisse gleichzeitig erfassen. Die Vorteile der Zusatzbewehrung gemäß der Erfindung liegen auf der Hand; denn die Bewehrung kann der tatsächlichen Anforderung auf dem Verlegemittel direkt angepaßt werden, wobei auch die erforderliche Anzahl von Kabeln mit einkalkuliert werden kann. Je nach Ausführungsbeispiel kann eine beliebige Anzahl von Kabeln gleichzeitig mit einer einzigen Zusatzbewehrung versehen werden. Am Beginn und am Ende der aufgebrachten Zusatzbewehrungen wird jeweils bei Bedarf ein geeigneter Abschluß angebracht. Die Zusatzbewehrungen selbst werden gegen Korrosion durch entsprechende Beschichtungen, zum Beispiel aus Kunststoff geschützt, wobei diese Beschichtungen zusätzlich so gestaltet werden, daß durch sie die Fixierung der eingebrachten Kabel möglich wird. Die längsverlaufenden Aufnahmen für die Kabel sind so ausgebildet, daß die Kabel in einfacher Weise eingeführt und fixiert werden können, wobei darauf geachtet ist, daß in die Aufnahmen auch Wasser eindringen kann, damit nicht zusätzlicher Auftrieb durch Lufteinschlüsse entstehen kann.

Die Erfindung wird nun anhand von zehn Figuren näher erläutert.
- Die Figur 1: zeigt Einsatzfälle für Zusatzbewehrungen gemäß der Erfindung.
- Die Figur 2: zeigt eine Zusatzbewehrung mit verformbaren Aufnahmen zur Fixierung eines eingebrachten Kabels.
- Die Figur 3: zeigt eine Zusatzbewehrung mit einer federnden Fixierung für eingebrachte Kabel.
- Die Figuren 4 und 5: zeigen Ausführungsbeispiele von Zusatzbewehrungen, die zur Aufnahme mehrerer Kabel geeignet sind.
- Die Figur 6: zeigt ein Ausführungsbeispiel mit einem zentralen zugfesten Element.
- Die Figur 7: zeigt ein Ausführungsbeispiel mit zwei nebeneinander verlaufenden zugfesten Elementen und zwei Aufnahmen für Kabel.
- Die Figur 8: zeigt ein Ausführungsbeispiel für drei zugfeste Elemente und drei Aufnahmen für Kabel.
- Die Figur 9: zeigt ein weiteres Ausführungsbeispiel mit einer Vielzahl von einzelnen zugfesten Elementen.
- Die Figur 10: zeigt ein Ausführungsbeispiel mit konzentrisch verteilten zugfesten Elementen.
- Die Figur 11: zeigt ein Ausführungsbeispiel mit verformbaren Schenkeln.
- Die Figur 12: zeigt ein Ausführungsbeispiel mit federnden Schenkeln.
- Die Figur 13: zeigt ein Ausführungsbeispiel mit einer als Schnappelement ausgebildeten Zusatzbewehrung.
- Die Figur 14: zeigt ein Anfangs- bzw. Endstück für die Fixierung der Zusatzbewehrungen an den eingeführten Kabeln.
- Die Figur 15: zeigt einen weiteren Abschluß für die Zusatzbewehrung.

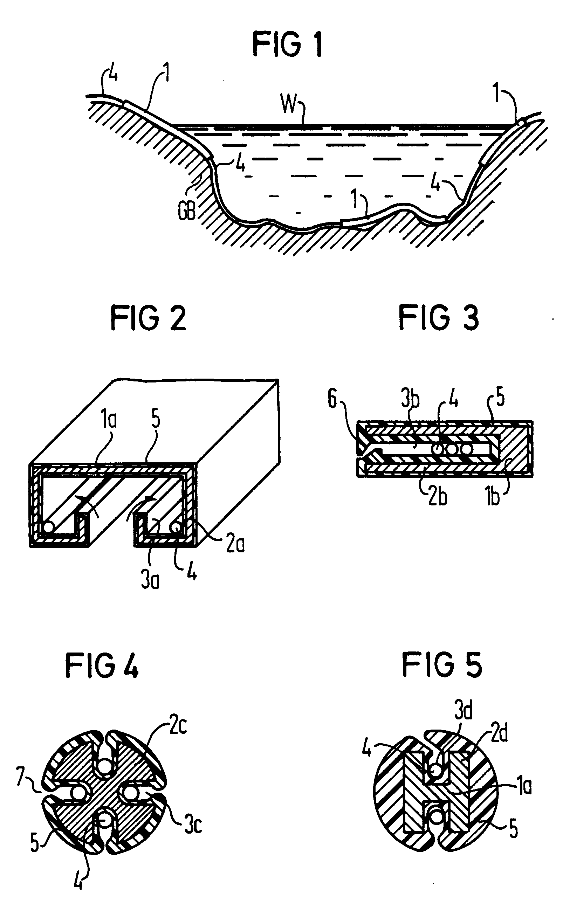

Figur 1 zeigt, wie mit Hilfe der Zusatzbewehrung 1 gemäß der Erfindung ein Kabel 4 den Gegebenheiten in einem Gewässer W angepaßt werden kann. In der Ufernähe besteht besonders große Beschädigungsgefahr, so daß das Kabel 4 hier mit der Zusatzbewehrung 1 versehen ist, während in tieferen Bereichen die kabeleigene Bewehrung völlig ausreichend ist. Beispielsweise kann auch in Zwischenbereichen mit erhöhter Gefahr durch Hindernisse am Gewässergrund GB wieder ein Stück der Zusatzbewehrung 1 aufgebracht werden. Auf diese Weise ist es möglich, mit einem einzigen, für Normalbedingungen völlig ausreichenden Kabeltyp ohne Spleißung die gesamte Kabellänge nachträglich beim Verlegen des Kabels 4 den Verhältnissen anzugleichen.

Die Figur 2 zeigt ein erstes Ausführungsbeispiel der Erfindung für eine Zusatzbewehrung 1a, bei der zwei Möglichkeiten für die Aufnahme eines Kabels 4 gegeben sind. Die Zusatzbewehrung 1a weist zwei U-förmig angesetzte Schenkel 2a auf, so daß sich zwei längsgerichtete U-förmige Aufnahmen 3a für die Kabel 4 ergeben. Diese Schenkel 2a erhöhen die Zugfestigkeit der Zusatzbewehrung 1a wie auch damit der darin eingesetzten Kabel 4. Die beiden inneren Schenkel 2a der beiden Aufnahmen 3a sind zweckmäßigerweise verformbar gestaltet, so daß die eingelegten Kabel 4 durch Einbiegen - wie die Pfeile andeuten - innerhalb der Aufnahmen fixiert werden können. Diese Zusatzbewehrung wie auch alle folgenden Ausführungsbeispiele werden auf dem Verlegemittel, zum Beispiel einem Schiff, parallellaufend zusammengeführt und bei Bedarf in gegenseitigen Eingriff gebracht, so daß die Zusatzbewehrung zu jedem beliebigen Zeitpunkt aufgebracht und abgesetzt werden kann.

Figur 3 zeigt ein zweites Ausführungsbeispiel, bei dem die eigentliche Zusatzbewehrung 1b zwei abstehende Schenkel 2b aufweist, die gegeneinander federnd angeordnet sind. So wird hier eine längsverlaufende Aufnahme 3b gebildet, in welche je nach Länge der Schenkel 2b mehrere Kabel 4 eingeführt werden können. An den Enden der Schenkel 2b sind Nocken 6 angeordnet, die ein Ausgleiten der Kabel 4 verhindern. Dieser Verschluß durch die Nocken 6 ist jedoch so ausgebildet, daß Wasser in die Aufnahme 3b eindringen kann, so daß die Bildung von Auftrieb fördernden Lufteinschlüssen beim Verlegen verhindert wird.

Die Figur 4 zeigt die Frontansicht einer Zusatzbewehrung 1c mit sternförmig abstehenden Schenkeln 2c. Hierdurch lassen sich mehrere - in diesem Fall vier - Aufnahmen 3c für Kabel 4 ausbilden. Durch entsprechende Hinterschneidungen der Schenkel 2c oder - wie hier gezeigt ist - durch Verdickungen 7 von aufgebrachten Beschichtungen 5 werden wieder verschlußartige Verengungen an den Aufnahmen 3c geschaffen, die ein Ausgleiten der eingelegten Kabel 4 verhindern. Auch diese Ausbildung ist durch die angesetzten Schenkel 2c besonders zugfest gestaltet und bildet einen ausreichenden Schutz für die nicht oder schwach bewehrten Kabel.

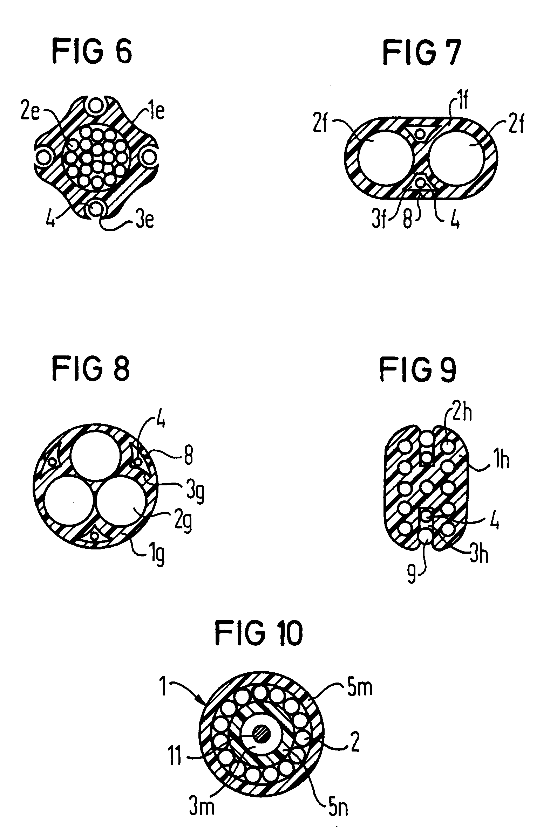

Die Figur 5 erläutert in einer Frontansicht eine Zusatzbewehrung 1d mit H-förmig angeformten zugfesten Schenkeln 2d, so daß sich auf diese Weise zwei nutförmige Aufnahmen 3d bilden, in welche die zu bewehrenden Kabel 4 eingelegt werden. Die gesamte Zusatzbewehrung 1d mit den Schenkel 2d wird von einer Beschichtung 5 umgeben, die insgesamt eine runde - hier ovale - Grundform ergibt. Hierdurch lassen sich besonders Reibungsverluste am Gewässergrund verringern. Die Beschichtung 5 ist auch hier wiederum an den Eingängen der Aufnahmen 3d verdickt und zu speziell geformten Einführungskanälen ausgeformt, um ein unbeabsichtigtes Ausgleiten der Kabel 4 zu verhindern.

Die Figuren 6 bis 9 zeigen nun Ausführungsbeispiele, bei denen separate zugfeste Elemente 2e, 2f, 2g bzw. 2h in der Zusatzbewehrung 1e, 1f, 1g bzw. 1h eingelagert sind. Diese zugfesten Elemente bestehen entweder aus Einzelelementen oder aus mehreren Fasern bzw. Fäden, die parallel laufend oder miteinander verseilt innerhalb der Zusatzbewehrung eingebettet sind. In der Zusatzbewehrung sind dann jeweils die längs gerichteten Aufnahmen 3e, 3f, 3g bzw. 3h eingebracht, in denen die zu bewehrenden Kabel 4 eingeführt sind. Durch eine derartige Ausbildung, insbesondere durch eine Verseilung einzelner dünner zugfester Elemente, kann die gesamte Anordnung der Zusatzbewehrung sehr flexibel gehalten werden, ohne daß die Zugfestigkeit oder die Schutzfähigkeit beeinträchtigt werden. Die Einzelheiten dieser Ausführungsbeispiele werden nachstehend näher erläutert.

Figur 6 zeigt in der Frontansicht eine an sich kompakte Zusatzbewehrung 1e mit annähernd rundem Querschnitt, die im Inneren mit den oben beschriebenen zugfesten Elementen 2e ausgerüstet ist und die am Umfang zum Beispiel vier längsverlaufende Aufnahmen 3e für die Kabel 4 aufweist. Die Aufnahmen 3e können wiederum mit entsprechenden Hinterschneidungen an den Öffnungen versehen sein. Es ist auch möglich, diese Aufnahmen 3e als geschlossene Kanäle auszubilden, die dann bei Verlegung mit einem Hilfsmittel aufgeschnitten werden, wobei zweckmäßigerweise anschließend sofort die Einführung der Kabel 4 erfolgt. Vorzugsweise sind diese Kanäle jedoch mit Öffnungen versehen, damit beim Wassern der so bewehrten Kabel Wasser eindringen kann. Beispielsweise kann hierfür eine Art Perforation vorgesehen werden.

Die Figur 7 zeigt die Frontansicht eines Ausführungsbeispiels gemäß der Erfindung, bei dem zwei zugfeste Elemente 2f nebeneinander liegend in der Zusatzbewehrung 1f eingebracht sind. Durch diesen Aufbau ist gegeben, daß die Aufnahmen 3f in den Zwickelbereichen zwischen den beiden zugfesten Elementen 2f angeordnet werden. Die Ausführungen dieser Aufnahmen 3f, sowie der zugfesten Elemente 2f können ebenfalls in den bereits beschriebenen Varianten ausgebildet sein.

Das Ausführungsbeispiel nach Figur 8 zeigt die Frontansicht einer Zusatzbewehrung 1g mit drei zugfesten Elementen 2g, die ebenfalls entsprechend variiert werden können. Außerdem ist möglich, diese zugfesten Elemente 2g untereinander nach an sich bekannten Prinzipien zu verseilen, so daß auch dann für die längsgerichteten Aufnahmen 3g eine der Verseilart entsprechende Längsverschiebung auf dem Umfang zustande kommt. Die Aufnahmen 3g sind beispielsweise wieder mit einem Schlitz 8 versehen, durch den das Ausgleiten der Kabel 4 verhindert wird, wobei Wasser ins Innere eindrindringen kann.

Die Figur 9 zeigt ein weiteres Ausführungsbeispiel, bei dem in der Zusatzbewehrung 1h die Anordnung einer Vielzahl von zugfesten Elementen 2h in einer H-Form erfolgt. Bei entsprechender Aussparung ergeben sich der H-Form entsprechend zwei nutförmige Aufnahmen 3h, in welche die Kabel 4 eingelegt werden können. Als Sicherung für die Kabel könnte zum Beispiel ein Rastverschluß 9 ausgebildet werden. Hier wird dann in der nutförmigen Aufnahme 3h ein rastendes Element, zum Beispiel ein Rundprofil oder auch Kugeln, in den Außenbereich der Aufnahme 3h eingedrückt, wobei vorzugsweise Rillen oder ähnliches in der Wandung der Aufnahmen 3h die Rastwirkung erhöhen.

Figur 10 vermittelt ein Ausführungsbeispiel, bei dem die als Zusatzbewehrung 1 ausgebildeten zugfesten Elemente 2 m innerhalb von zwei als Beschichtung ausgebildeten rohrförmigen Kunststoffrohren 5m und 5n angeordnet sind. Die zugfesten Elemente 2m sind entweder gleichmäßig oder auch in variablen Abständen konzentrisch im Umfang verteilt angeordnet. Im Inneren des Innenrohres 5n befindet sich die längsverlaufende Aufnahme 3m für das zu bewehrende Kabel. Ja nach Verlegeart kann zum Beispiel auch ein Zugdraht 11 in die Aufnahme 3m eingesetzt werden, durch den nun auch möglich wird, daß das zu bewehrende Kabel erst später eingezogen wird. Dieses Verfahren ist dann besonders praktikabel, wenn das Seekabel nur jeweils im Uferbereich geschützt werden soll. Damit ist durch dieses Ausführungsbeispiel gemäß der Erfindung auch ein nachträgliches Einführen des Kabels möglich, wobei bezüglich des Materials der einzelnen Elemente und der Aufgabenerfüllung alle vorher beschriebenen Merkmale gelten. Die beiden Kunststoffrohre 5m und 5n können auch als kompaktes Zugelement ausgebildet werden, wenn die zugfesten Elemente 2m direkt im Material der Umhüllung 5 eingebettet werden. Diese Einlagerung läßt sich dann bereits bei der Herstellung der Zusatzbewehrung bei der Extrusion des Kunststoffrohres berücksichtigen.

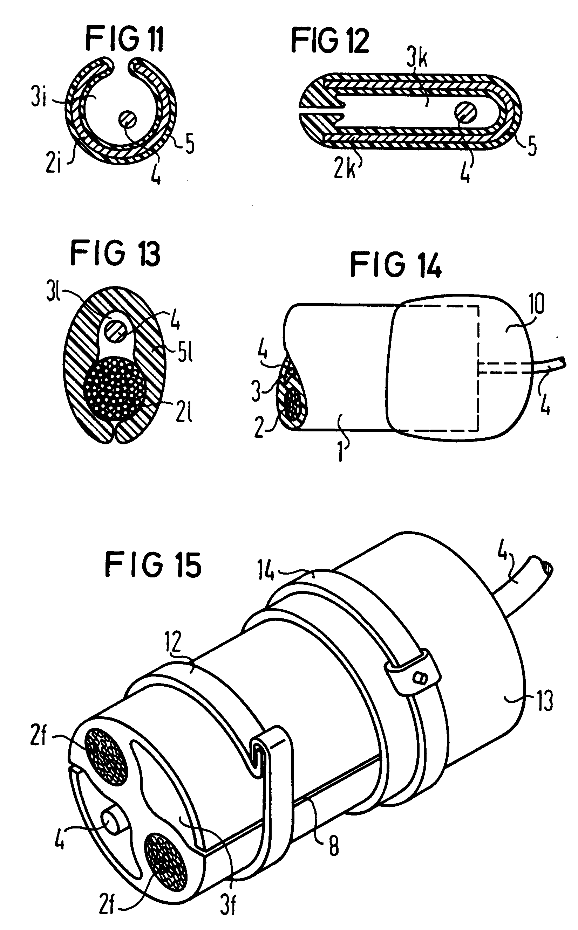

Die Figur 11 zeigt ein Ausführungsbeispiel mit verformbaren Schenkeln 2 i, das dem Beispiel nach Figur 1 ähnelt. Doch sind hier die Schenkel 2 i kreisrund angeordnet und bilden zunächst einen längsverlaufenden Spalt, durch welchen das zu bewehrende Kabel 4 in die längsverlaufende Aufnahme 3 i eingebracht werden kann.

Nach dem Einbringen, werden die beiden Schenkel 2 i gegeneinandergedrückt, so daß das Kabel 4 nicht unvorhergesehen austreten kann. Die Schenkel 2 i, die als zugfeste Elemente ausgebildet sind, werden vorzugsweise mit einer Schutzschicht 5, zum Beispiel einem Kunststoff, als Korrosionsschutz umgeben.

Die Figur 12 zeigt ein abgewandeltes Ausführungsbeispiel nach Figur 3. Das Prinzip für die Aufnahme 3 k des Kabels 4 ist gleich; es ist ein längsverlaufender Hohlraum, der durch U-förmig angeordnete federnde Schenkel 2 k als Rastverschluß am einen Ende ausgebildet ist. Die Schenkel 2 k sind eingebettet in einem Korrosionsschutz, der auch den Rastverschluß bildet. Die Außenkonturen sind möglichst abgerundet, um Reibung an Kanten und dergleichen zu vermindern.

Die Figur 13 zeigt ein Ausführungsbeispiel, bei dem als Fixierelement für Kabel 4 und das zugfeste Element 2 l ein Kunststoffprofil 5 l verwendet wird, das klauenhaft auf das zugfeste Element 2 l aufgeschnappt wird. Dabei ist das Innenprofil dem zugfesten Element 2 l angepaßt, das nach dem Kabel 4 eingedrückt wird, so daß es für die ausgesparte Aufnahme 3 l, die das Kabel 4 aufnimmt, gleichzeitig als Abschluß dient. Das zugfeste Element 2 l kann als Einzelelement oder aus vielen faserförmigen Elementen, zum Beispiel als Stahlseil, in der bereits beschriebenen Art ausgebildet sein.

In Figur 14 wird noch verdeutlicht, daß die Enden bzw. die Beginnstücke der aufzubringenden Zusatzbewehrung 1 gesichert und eventuell auch geschlossen werden. Dies erfolgt zum Beispiel mit Hilfe einer Gießharzplombe 10, durch welche die Zusatzbewehrung 1 mit den Kabeln 4 zusammenfixiert werden.

In Figur 15 wird ein weiterer Endabschluß 13 gezeigt, mit dem eine Zusatzbewehrung, in diesem Fall zum Beispiel nach Figur 7, an ihrem Ende fixiert wird. Die Zusatzbewehrung besitzt hier zum Beispiel zwei längsverlaufende zugfeste Elemente 2 f, die aus Einzelelementen bestehen. In einer der längs verlaufenden Aufnahmen 3 f ist ein zu bewehrendes Kabel 4 eingebracht, das am Ende der Zusatzbewehrung ohne diese weiter verlegt wird. Um nun dieses Ende der Zusatzbewehrung zu fixieren, ist hier ein Wickelband 13, zum Beispiel aus einem Elastomer, aufgewickelt, das mit einer Schelle 14 befestigt wird. Weiterhin ist angedeutet, daß die Aufnahmen der Zusatzbewehrung mit Hilfe von Schellen 12, die zum Beispiel aufgefalzt werden, gesichert sind. Diese Schellen 12 werden je nach Erfordernis in entsprechenden Abständen aufgebracht. Ein solcher Abschluß läßt sich sowohl am Anfang als auch am Ende der Zusatzbewehrung aufsetzen, so daß diese gegen unbeabsichtigtes Abgleiten vom Kabel ausreichend gesichert ist.

Selbstverständlich ist es möglich, die in den einzelnen Ausführungsbeispielen diskutierten Varianten untereinander zu kombinieren, so daß sich auch sinnvolle und optimierte Kombinationen für den gerade erforderlichen Einsatzfall herstellen lassen.

Die zugfesten Elemente der Ausführungsbeispiele nach den Figuren 2 bis 5 bestehen vorzugsweise aus Walzstahl, eventuell feuerverzinkt oder bituminiert und sind mit Polyethylen oder Polypropylen ummantelt. Bei den Ausführungsbeispielen nach den Figuren 6 bis 9 werden vorzugsweise Stahlseile, gegebenenfalls auch feuerverzinkt, bituminiert und mit Polyolefin ummantelt, eingesetzt. Bei besonderen Qualitätsansprüchen wird Edelstahl verwendet. Zugfeste Fäden und Stränge aus Glas- oder Kunststoffgarnen sind ebenfalls einsetzbar.

## Patentansprüche

1. Zusatzbewehrung (1) für Kabel, insbesondere Seekabel, wobei das Kabel (4) in Aufnahmen (3) dieser längsverlaufenden Zusatzbewehrung (1) eingebracht ist, **dadurch gekennzeichnet,** daß die Zusatzbewehrung (1) längsgerichtete, zugfeste Elemente (2) aufweist und daß die Aufnahmen (3) in der Hauptrichtung kontinuierlich fortlaufend angeordnet sind.

2. Zusatzbewehrung nach Anspruch 1, **dadurch gekennzeichnet,** daß die Aufnahmen (3) für die Kabel (4) als U-förmige Kanäle aus abstehenden Schenkeln (2) der Zusatzbewehrung (1) ausgebildet sind.

3. Zusatzbewehrung nach Anspruch 2, **dadurch gekennzeichnet,** daß die Schenkel (2) verformbar sind.

4. Zusatzbewehrung nach Anspruch 2, **dadurch gekennzeichnet**, daß die Schenkel (2) zur Fixierung der Kabel (4) federnd ausgebildet sind.

5. Zusatzbewehrung nach einem der vorhergehenden Ansprüche, **dadurch gekennzeichnet**, daß mehrere Schenkel (2) für die Bildung von einer Mehrzahl von Aufnahmen (3) sternförmig von einer zentralen Zusatzbewehrung (1) abstehen.

6. Zusatzbewehrung nach einem der vorhergehenden Ansprüche, **dadurch gekennzeichnet,** daß die Aufnahmen (3) als längsverlaufende Hohlräume in der Zusatzbewehrung (1) ausgebildet sind, wobei die Hohlräume eine längsverlaufende auftrennbare Schwachstelle (8) aufweisen.

7. Zusatzbewehrung nach Anspruch 6, **dadurch gekennzeichnet,** daß die Schwachstelle (8) in Abständen nach auswärts gerichtete Öffnungen aufweist.

8. Zusatzbewehrung nach einem der vorhergehenden Ansprüche, **dadurch gekennzeichnet,** daß die Schenkel (2a, 2b, 2c, 2d) der Aufnahmen (3a, 3b, 3c, 3d) und die Zusatzbewehrung (1a, 1b, 1c, 1d) aus zugfestem, vorzugsweise gleichem Material bestehen.

9. Zusatzbewehrung nach einem der Ansprüche 1 bis 7, **dadurch gekennzeichnet,** daß separate zugfeste Elemente (2e, 2f, 2g, 2h), insbesondere faser- oder fadenartig ausgebildete, in der Zusatzbewehrung (1e, 1f, 1g, 1h) eingelagert sind.

10. Zusatzbewehrung nach einem der vorhergehenden Ansprüche, **dadurch gekennzeichnet**, daß die zugfesten Elemente (2e, 2f, 2g, 2h) aus miteinander verseilten Fasern bzw. Fäden zugfester Materialien bestehen.

11. Zusatzbewehrung nach einem der vorhergehenden Ansprüche, **dadurch gekennzeichnet**, daß ein zugfestes Element (2e) zentrisch in der Zusatzbewehrung (1e) angeordnet ist.

12. Zusatzbewehrung nach einem der Ansprüche 1 bis 10, **dadurch gekennzeichnet,** daß mehrere zugfeste Elemente (2f, 2g, 2h) in der Zusatzbewehrung (1f, 1g, 1h) angeordnet sind.

13. Zusatzbewehrung nach Anspruch 12, **dadurch gekennzeichnet,** daß zwei zugfeste Elemente (2f) in der Zusatzbewehrung (1f) nebeneinander angeordnet sind und daß die Aufnahmen (3f) zwischen den beiden zugfesten Elementen (2f) in den Zwickelbereichen verlaufen.

14. Zusatzbewehrung nach Anspruch 12, **dadurch gekennzeichnet,** daß drei zugfeste Elemente (2g) in der Zusatzbewehrung (1g), vorzugsweise miteinander verseilt, angeordnet sind und daß die Aufnahmen (3g) in den äußeren Zwickelbereichen angeordnet sind.

15. Zusatzbewehrung nach Anspruch 12, **dadurch gekennzeichnet,** daß die zugfesten Elemente (2h) H-förmig in der Zusatzbewehrung (1h) angeordnet sind und daß die dadurch gebildeten schlitzförmigen Aufnahmen (3h) mit Verschlußelementen (9) versehbar sind.

16. Zusatzbewehrung nach Anspruch 15, **dadurch gekennzeichnet,** daß kugelförmige Verschlußelemente im Abstand voneinander in den Außenbereichen der Aufnahmen (3h) einklemmbar sind.

17. Zusatzbewehrung nach Anspruch 15, **dadurch gekennzeichnet,** daß bandförmige Verschlußelemente (9) einklemmbar sind.

18. Zusatzbewehrung nach einem der Ansprüche 1 bis 10, **dadurch gekennzeichnet,** daß die zugfesten Elemente (2 m) konzentrisch um eine rohrförmig ausgebildete Aufnahme (3 m) angeordnet sind.

19. Zusatzbewehrung nach Anspruch 18, **dadurch gekennzeichnet,** daß in der Aufnahme (3 m) ein Zugdraht (11) angeordnet ist.

20. Zusatzbewehrung nach einem der Ansprüche 18 oder 19, **dadurch gekennzeichnet,** daß die zugfesten Elemente (2 m) zwischen zwei konzentrisch angeordneten Hüllen (5 m, 5 n) eingelagert sind.

21. Zusatzbewehrung nach einem der Ansprüche 18 oder 19, **dadurch gekennzeichnet,** daß die zugfesten Elemente (2 m) in einer Hülle (5 m) eingebettet sind.

22. Zusatzbewehrung nach einem der vorhergehenden Ansprüche, **dadurch gekennzeichnet,** daß sie (1) an beliebiger Stelle abtrennbar bzw. ansetzbar ist.

23. Zusatzbewehrung nach Anspruch 22, **dadurch gekennzeichnet,** daß sie (1) an ihren Enden mittels eines Abschlusses (10), insbesondere einer Gießharzplombe, am Kabel (4) fixiert ist.

24. Zusatzbewehrung nach Anspruch 22, **dadurch gekennzeichnet,** daß sie (1) an ihren Enden mittels eines Wickelbandes (13) und einer Fixierschelle (14) gesichert ist.

25. Zusatzbewehrung nach einem der vorhergehenden Ansprüche, **dadurch gekennzeichnet,** daß Schellen (12) in Abständen aufgebracht sind.

26. Zusatzbewehrung nach einem der vorhergehenden Ansprüche, **dadurch gekennzeichnet,** daß die zugfesten Elemente (2) aus Walzstahl, vorzugsweise feuerverzinkt oder bituminiert, bestehen.

27. Zusatzbewehrung nach einem der Ansprüche 1 bis 25, **dadurch gekennzeichnet,** daß die zugfesten Elemente (2) aus Stahlseilen bestehen, vorzugsweise feuerverzinkt oder bituminiert.

28. Zusatzbewehrung nach einem der vorhergehenden Ansprüche, **dadurch gekennzeichnet,** daß die zugfesten Elemente (2) mit einem Kunststoff, vorzugsweise Polyethylen oder Polypropylen bzw. Polyolefin, ummantelt sind.

29. Zusatzbewehrung nach einem der Ansprüche 7 bis 25, **dadurch gekennzeichnet,** daß die zugfesten Elemente (2) aus einzelnen Glas- oder Kunststoffgarnen gebildet werden.

## Claims

1. Additional armour (1) for cables, in particular submarine cables, the cable (4) being inserted in receptacles (3) of this longitudinally extending additional armour (1), characterised in that the additional armour (1) has longitudinally aligned, tension-proof elements (2), and in that the receptacles (3) are arranged running continuously in the main direction.

2. Additional armour according to Claim 1, characterised in that the receptacles (3) for the cables (4) are constructed as U-shaped channels from protruding limbs (2) of the additional armour (1).

3. Additional armour according to Claim 2, characterised in that the limbs (2) are deformable.

4. Additional armour according to Claim 2, characterised in that the limbs (2) are constructed resiliently for the purpose of fixing the cables (4).

5. Additional armour according to one of the preceding claims, characterised in that a plurality of limbs (2) protrude in the shape of a star from a central additional armour (1) in order to form a plurality of receptacles (3).

6. Additional armour according to one of the preceding claims, characterised in that the receptacles (3) are constructed as longitudinally extending cavities in the additional armour (1), the cavities having a longitudinally extending weak point (8) which can be split open.

7. Additional armour according to Claim 6, characterised in that the weak point (8) has outwardly directed openings at intervals.

8. Additional armour according to one of the preceding claims, characterised in that the limbs (2a, 2b, 2c, 2d) of the receptacles (3a, 3b, 3c, 3d) and the additional armour (1a, 1b, 1c, 1d) comprise tension-proof, preferably identical material.

9. Additional armour according to one of Claims 1 to 7, characterised in that separate tension-proof elements (2e, 2f, 2g, 2h), in particular constructed like fibres or filaments, are embedded in the additional armour (1e, 1f, 1g, 1h).

10. Additional armour according to one of the preceding claims, characterised in that the tension-proof elements (2e, 2f, 2g, 2h) comprise mutually stranded fibres or filaments of tension-proof materials.

11. Additional armour according to one of the preceding claims, characterised in that a tension-proof element (2e) is arranged centrally in the additional armour (1e).

12. Additional armour according to one of Claims 1 to 10, characterised in that a plurality of tension-proof elements (2f, 2g, 2h) are arranged in the additional armour (1f, 1g, 1h).

13. Additional armour according to Claim 12, characterised in that two tension-proof elements (2f) are arranged next to one another in the additional armour (1f), and in that the receptacles (3f) extend in the interstices between the two tension-proof elements (2f).

14. Additional armour according to Claim 12, characterised in that three tension-proof elements (2g) are arranged, preferably mutually stranded, in the additional armour (1g), and in that the receptacles (3g) are arranged in the outer interstices.

15. Additional armour according to Claim 12, characterised in that the tension-proof elements (2h) are arranged in the shape of an H in the additional armour (1h), and in that the slot-shaped receptacles (3h) thereby formed can be provided with closing elements (9).

16. Additional armour according to Claim 15, characterised in that spherical closing elements can be wedged at an interval from one another in the outer regions of the receptacles (3h).

17. Additional armour according to Claim 15, characterised in that strip-shaped closing elements (9) can be wedged in.

18. Additional armour according to one of Claims 1 to 10, characterised in that the tension-proof elements (2m) are arranged concentrically about a tubularly constructed receptacle (3m).

19. Additional armour according to Claim 18, characterised in that a draw wire (11) is arranged in the receptacle (3m).

20. Additional armour according to one of Claims 18 or 19, characterised in that the tension-proof elements (2m) are embedded between two concentrically arranged jackets (5m, 5n).

21. Additional armour according to one of Claims 18 or 19, characterised in that the tension-proof elements (2m) are embedded in a jacket (5m).

22. Additional armour according to one of the preceding claims, characterised in that it (1) can be separated and fitted at any desired point.

23. Additional armour according to Claim 22, characterised in that it (1) is fixed at its ends to the cable (4) by means of a closure (10), in particular a cast resin seam.

24. Additional armour according to Claim 22, characterised in that it (1) is secured at its ends by means of a wound tape (13) and a fixing clamp (14).

25. Additional armour according to one of the preceding claims, characterised in that clamps (12) are applied at intervals.

26. Additional armour according to one of the preceding claims, characterised in that the tension-proof elements (2) comprise rolled steel, preferably hot-galvanised or bituminised.

27. Additional armour according to one of Claims 1 to 25, characterised in that the tension-proof elements (2) comprise steel cables, preferably hot-galvanised or bituminised.

28. Additional armour according to one of the preceding claims, characterised in that the tension-proof elements (2) are sheathed in a plastic, preferably polyethylene or polypropylene or polyolefin.

29. Additional armour according to one of Claims 7 to 25, characterised in that the tension-proof elements (2) are formed from individual glass or plastic fibres.

## Revendications

1. Armature supplémentaire (1) pour câble, notamment pour câble sous-marin, le câble (4) étant inséré dans des logements (3 de cette armature supplémentaire longitudinale (1), caractérisée par le fait que l'armature supplémentaire (1) possède des éléments longitudinaux (2) résistant à la traction et que les logements (3) sont disposés de manière à se prolonger de façon continue dans la direction principale.

2. Armature supplémentaire suivant la revendication 1, caractérisée par le fait que les logements (3) pour les câbles (4) sont réalisés sous la forme de canaux en forme de U constitués par des branches saillantes (2) de l'armature supplémentaire (1).

3. Armature supplémentaire suivant la revendication 2, caractérisée par le fait que les branches (2) sont déformables.

4. Armature supplémentaire suivant la revendication 2, caractérisée par le fait que les branches (2) sont élastiques pour immobiliser les câbles (4).

5. Armature supplémentaire suivant l'une des revendications précédentes, caractérisée par le fait que plusieurs branches (2) font saillie en étoile à partir d'une armature supplémentaire centrale (1), pour former une multiplicité de logements (3).

6. Armature supplémentaire suivant l'une des revendications précédentes, caractérisée par le fait que les logements (3) ont la forme de cavités longitudinales dans l'armature supplémentaire (1), les cavités possédant une zone d'affaiblissement longitudinale (8) pouvant être rompue.

7. Armature supplémentaire suivant la revendication 6, caractérisée par le fait que la zone d'affaiblissement (8) possède des ouvertures dirigées par intervalles en direction de l'extérieur.

8. Armature supplémentaire suivant l'une des revendications précédentes, caractérisée par le fait que les branches (2a,2b,2c,2d) des logements (3a,3b,3c,3d) et l'armature supplémentaire (1a,1b,1c,1d) sont en un matériau résistant à la traction qui, de préférence, est le même.

9. Armature supplémentaire suivant l'une des revendications 1 à 7, caractérisée par le fait que des éléments distincts (2e,2f,2g,2h) et résistant à la traction, notamment des éléments fibreux ou filiformes, sont insérés dans l'armature supplémentaire (1e,1f,1g,1h).

10. Armature supplémentaire suivant l'une des revendications précédentes, caractérisée par le fait que les éléments (2e,2f,2g,2h) et résistant à la traction sont constitués de fibres ou de fils torsadés entre eux et en des matériaux résistant à la traction.

11. Armature supplémentaire suivant l'une des revendications précédentes, caractérisée par le fait qu'un élément (2e) résistant à la traction est disposé de manière centrée dans l'armature supplémentaire (1a).

12. Armature supplémentaire suivant l'une des revendications 1 à 10, caractérisée par le fait que plusieurs éléments (2f,2g,2h) résistant à la traction, sont disposés dans l'armature supplémentaire (1f,1g,1h).

13. Armature supplémentaire suivant la revendication 12, caractérisée par le fait que deux éléments (2f) résistant à la traction sont disposés côte-à-côte dans l'armature supplémentaire (1f) et que les logements (3f) s'étendent dans les zones cunéiformes, entre les deux éléments (2f) résistant à la traction.

14. Armature supplémentaire suivant la revendication 12, caractérisée par le fait que trois éléments (2g) résistant à la traction sont disposés dans l'armature supplémentaire (1g), de préférence en étant torsadés entre eux, et que les logements (3g) sont disposés dans les zones cunéiformes extérieures.

15. Armature supplémentaire selon la revendication 12, caractérisée en ce que les éléments (2h) résistant à la traction sont disposés en forme de H dans l'armature supplémentaire (1h) et que les logements en forme de fentes (3h), ainsi formés, peuvent être munis d'éléments de fermeture (9).

16. Armature supplémentaire suivant la revendication 15, caractérisée par le fait que des éléments de fermeture en forme de billes peuvent être incorporés, à distance les uns des autres, dans les zones extérieures des logements (3h).

17. Armature supplémentaire suivant la revendication 15, caractérisée par le fait que des éléments de fermeture en forme de bandes (9) peuvent être incorporés.

18. Armature supplémentaire suivant l'une des revendications 1 à 10, caractérisée par le fait que les éléments (2 m) et résistant à la traction sont disposés concentriquement autour d'un logement tubulaire (3 m).

19. Armature supplémentaire suivant la revendication 18, caractérisée par le fait qu'un fil de traction (11) est disposé dans le logement (3m).

20. Armature supplémentaire suivant l'une des revendications 18 ou 19, caractérisée par le fait que les éléments (2m) résistant à la traction sont insérés entre deux gaines concentriques (5 m, 5 n).

21. Armature supplémentaire suivant l'une des revendications 18 ou 19, caractérisée par le fait que les éléments (2 m) résistant à la traction sont insérés dans une gaine (5 m).

22. Armature supplémentaire suivant l'une des revendications précédentes, caractérisée par le fait qu'elle (1) peut être sectionnée ou raccordée en n'importe quel emplacement.

23. Armature supplémentaire suivant la revendication 22, caractérisée par le fait qu'elle (1) est immobilisée au câble (4), à ses extrémités, au moyen d'une fermeture (10), notamment d'un scellement formé d'une résine de coulée, au câble (4).

24. Armature supplémentaire suivant la revendication 22, caractérisée par le fait qu'elle (1) est bloquée, à ses extrémités, au moyen d'une bande enroulée (13) et d'un collier d'immobilisation (14).

25. Armature supplémentaire suivant l'une des revendications précédentes, caractérisée par le fait que des colliers (12) sont disposés par intervalles.

26. Armature supplémentaire suivant l'une des revendications précédentes, caractérisée par le fait que les éléments (2) résistant à la traction sont constitués par de l'acier laminé, de préférence galvanisé à chaud ou bitumé.

27. Armature supplémentaire suivant l'une des revendications 1 à 25, caractérisée par le fait que les éléments (2) résistant à la traction sont constitués par des torons d'acier, de préférence galvanisé à chaud ou bitumé.

28. Armature supplémentaire suivant l'une des revendications précédentes, caractérisée par le fait que les éléments (2) résistant à la traction sont enrobés d'une matière plastique, de préférence de polyéthylène ou de polypropylène ou d'une polyoléfine.

29. Armature supplémentaire suivant l'une des revendications 7 à 25, caractérisée par le fait que les éléments (2) résistant à la traction sont formés de fils de verre ou de matière plastique.
